# EUROPEAN PATENT SPECIFICATION

(11) **EP 0 967 142 B1**
(45) Date of publication and mention of the grant of the patent: **24.01.2007**
(21) Application number: 99304609.3
(22) Date of filing: 14.06.1999
(51) Int. Cl.: B62K 11/02, B62J 17/00

(54) **Rear frame for motor vehicle**
Hinterrahmen für Kraftfahrzeug
Chassis arrière pour véhicule à moteur

(30) Priority: 23.06.1998 JP 17548298
(43) Date of publication of application: 29.12.1999
(73) Proprietor: HONDA GIKEN KOGYO KABUSHIKI KAISHA, Minato-ku Tokyo (JP)
(72) Inventor: Hayashi, Yoshihiro, Honda G. Kogyo K. K. Kaisha, Hamamatsu-shi, Shizuoka (JP)
(74) Representative: Hall, Matthew Benjamin

(56) References cited:
- US-A- 4 487 283
- US-A- 4 727 953
- PATENT ABSTRACTS OF JAPAN vol. 018, no. 503 (M-1677), 21 September 1994 (1994-09-21) & JP 06 171570 A (YAMAHA MOTOR CO LTD), 21 June 1994 (1994-06-21)
- PATENT ABSTRACTS OF JAPAN vol. 017, no. 099 (M-1373), 26 February 1993 (1993-02-26) & JP 04 292283 A (HONDA MOTOR CO LTD), 16 October 1992 (1992-10-16)
- PATENT ABSTRACTS OF JAPAN vol. 014, no. 339 (M-1001), 23 July 1990 (1990-07-23) & JP 02 117487 A (HONDA MOTOR CO LTD), 1 May 1990 (1990-05-01)

## Description

The present invention relates to a rear frame for a motor vehicle such as a motorcycle or a three-wheeled automotive vehicle.

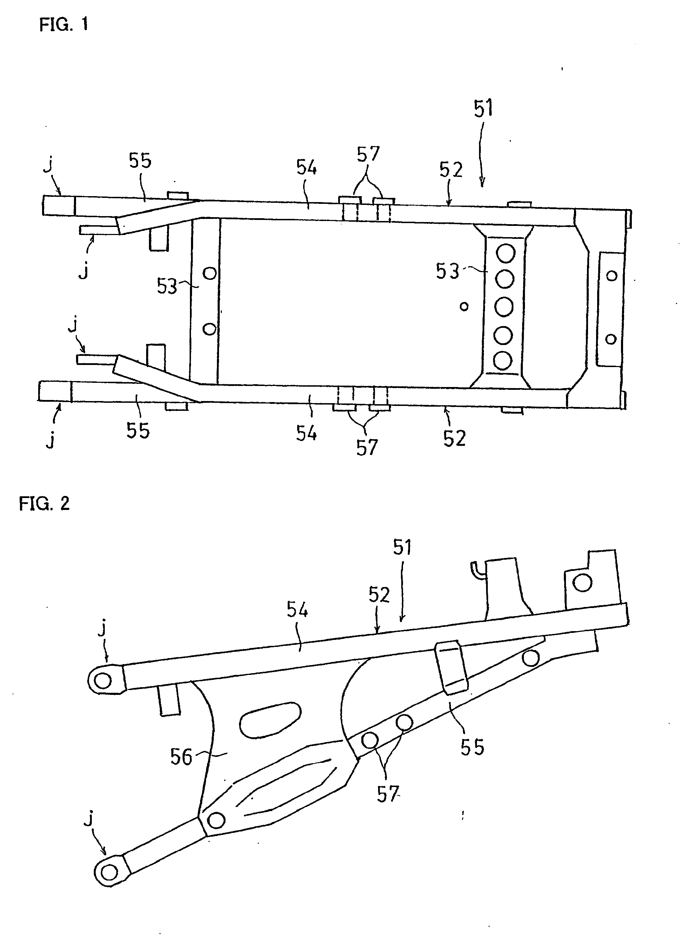

One known rear frame for such a motor vehicle is shown in FIGS. 1 and 2. This known rear frame, generally designated by the reference numeral 51, has a pair of substantially parallel main frame members 52 laterally spaced from each other and a plurality of cross frame members 53 extending between and interconnecting the main frame members 52. The cross frame members 53 have ends which abut against and are joined to inner side surfaces of the main frame members 52, whereby the distance between the main frame members 52 is determined by the length of the cross frame members 53.

Each of the main frame members 52 comprises an upper pipe 54 and a lower pipe 55, each having a rectangular cross-sectional shape, and a gusset plate 56 which reinforces the pipes 54 and 55. The lower pipe 55 extends obliquely upwardly toward a rear end thereof where it is integrally joined to the upper pipe 54. The upper and lower pipes 54, 55 have respective front ends constructed as frame joints j for connection to a front vehicle frame (not shown).

The gusset plates 56 of the respective main frame members 52 are different in shape from each other. The joints j of the upper pipes 54 are also different in shape from the joints j of the lower pipes 55.

The lower pipes 55 have nut attachment holes extending laterally therethrough at spaced positions thereon, and nuts 57 are fitted in the respective nut attachment holes.

This known rear frame 51 has the disadvantage that since each of the components thereof is designed to perform its own function, it is made up of many components, and many dies and jigs are required to fabricate those components. Also it is tedious and time-consuming to join the components together, because they need to be welded along lengthy edges thereof. Furthermore, some of the components are complex in shape, and hence it is time-consuming and costly to machine them to the desired accuracy.

According to the present invention there is provided a rear frame for a motor vehicle, comprising a pair of laterally spaced main frame members and a plurality of cross frame members interconnecting said main frame members, characterized in that one of said cross frame members having attachment means at respective opposite ends thereof for supporting side covers.

Since one of the cross frame members has attachment means at respective opposite ends thereof for supporting side covers, no dedicated brackets are required for supporting the side covers. Therefore, the rear frame is relatively simple in structure.

Opposite end portions of the said cross frame member may be project outwardly from the main frame members and be internally threaded to receive bolts for fastening the said side covers.

At least one of the said cross frame members may be vertically placed against and joined to the main frame members. As a result, the cross frame members are not required to have strict dimensional accuracy in their lengths. The lengths of the portions thereof to be joined to the upper or lower surfaces of the main frame members may be relatively small. The cross frame members can thus be installed with ease, so that the rear frame can be manufactured relatively inexpensively.

An embodiment of the invention will now be described by way of example and with reference to the accompanying drawings, in which:-
FIG. 1 is a plan view of a known rear frame;
FIG. 2 is a side elevational view of the known rear frame shown in FIG. 1;
FIG. 3 is a fragmentary side elevational view of a rear frame for a motorcycle according to the present invention, with associated parts;
FIG. 4 is a side elevational view of the rear frame shown in FIG. 3;
FIG. 5 is a plan view of the rear frame shown in FIG. 3;
FIG. 6 is a perspective view to illustrate the manner in which a front cross frame member is attached to main frame members of the rear frame shown in FIG. 3;
FIG. 7 is a cross-sectional view taken along line VII-VII of FIG. 6;
FIG. 8A is an exploded perspective view of a joint of an upper pipe;
FIG. 8B is a longitudinal cross-sectional view of the joint of the upper pipe shown in FIG. 8A;
FIG. 9A is an exploded perspective view of a joint of a lower pipe; and
FIG. 9B is a longitudinal cross-sectional view of the joint of the lower pipe shown in FIG. 9A.

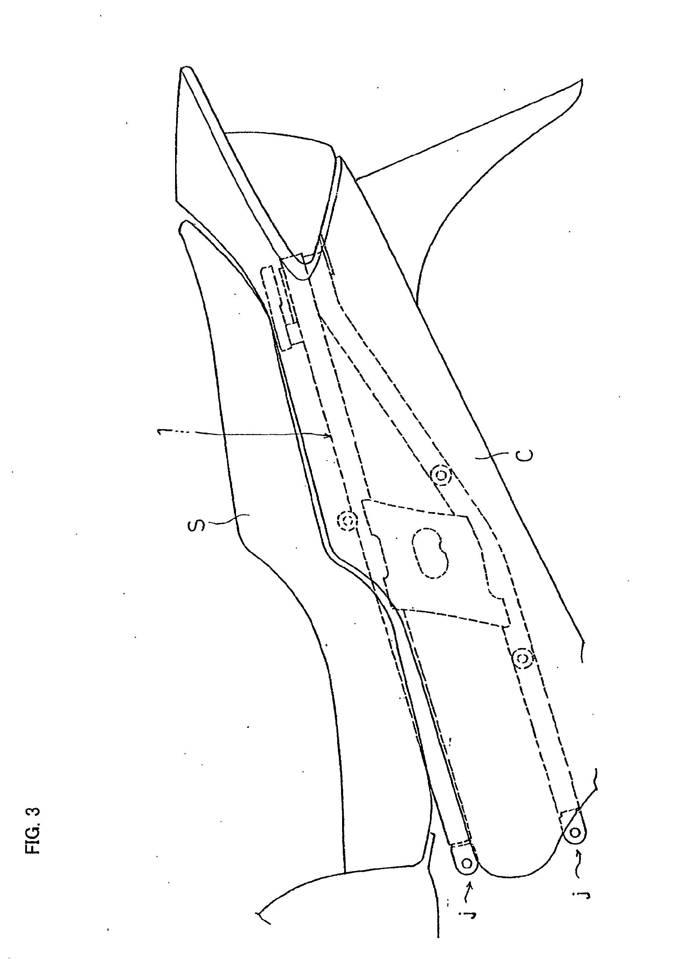

As shown in FIG. 3, a rear frame 1 for a motor vehicle such as a motorcycle or a three-wheeled automotive vehicle is of a relatively simple structure. It supports a rider's seat S, a pair of opposite side covers C, and a license plate (not shown).

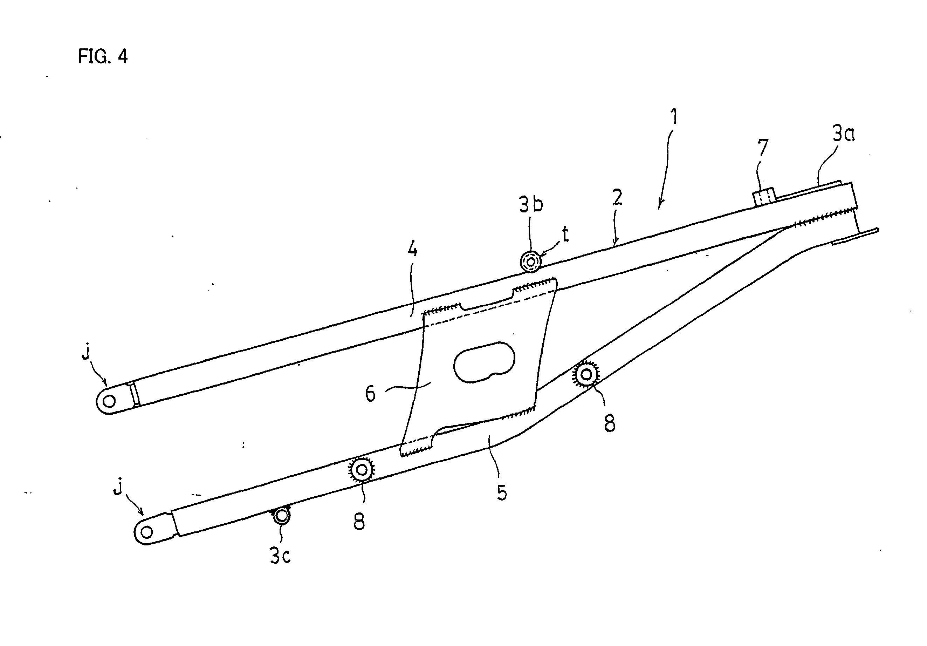

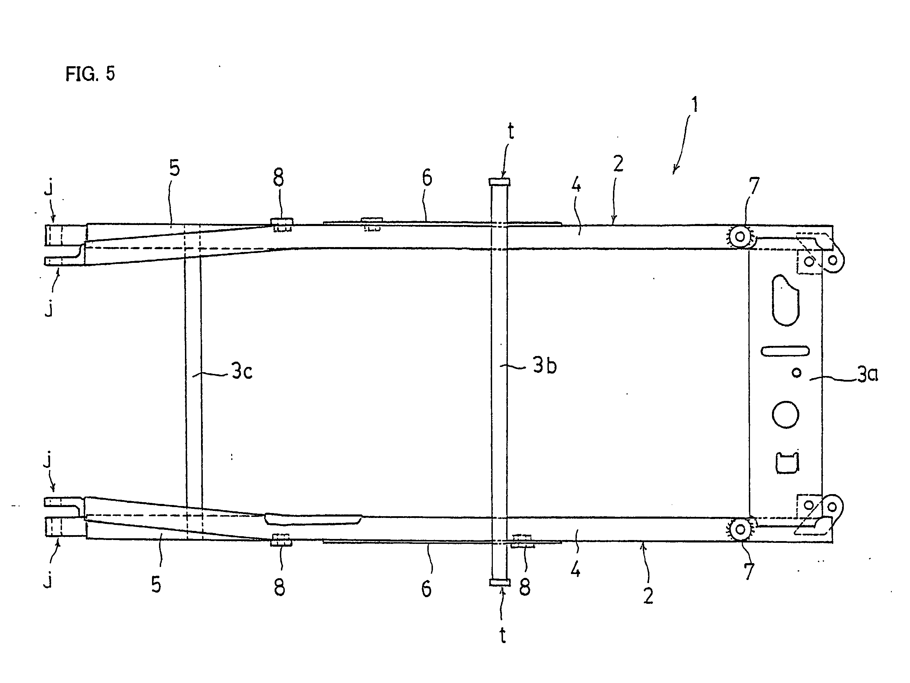

As shown in FIGS. 4 and 5, the rear frame 1 comprises a pair of substantially parallel main frame members 2 laterally spaced from each other, and a plurality of cross frame members 3a, 3b, 3c extending between and interconnecting the main frame members 2. The cross frame members 3a, 3b, 3c are spaced from each other along the length of the rear frame 1, and serve as rear, intermediate, and front cross frame members, respectively. The main frame members 2 comprise respective upper pipes 4 of rectangular cross sectional shape and respective lower pipes 5 again of rectangular cross-sectional shape substantially identical to the cross-sectional shape of the upper pipes 4. The lower pipes 5 have respective front portions spaced downwardly from the upper pipes 4 and respective rear portions extending obliquely upwardly toward rear ends thereof which are integrally joined to the upper pipes 4.

Gusset plates 6 are welded to outer side surfaces of the upper and lower pipes 4, 5. The pipes 4, 5 have their respective front ends constructed as frame joints j for connection to a front vehicle frame (not shown).

The intermediate cross frame member 3b and the front cross frame member 3c are each in the form of a pipe of circular cross-sectional shape. The intermediate cross frame member 3b is longer than the distance between the main frame members 2 and is placed on and welded to upper surfaces of the upper pipes 4, with its opposite end portions projecting outwardly from the main frame members 2 and serving as attachments t to which the side covers C are fixed.

The frame member 3b comprises a simple straight pipe having opposite ends internally threaded to provide the attachments t. The side covers C are fastened to the opposite ends of the frame member 3b by fasteners such as bolts or the like.

Since the frame member 3b functions as a member for interconnecting the main frame members 2 and also as a support for supporting the side covers C, no dedicated brackets for supporting the side covers C are needed, and the rear frame 1 can thus be made of a reduced number of components and simplified in its structure.

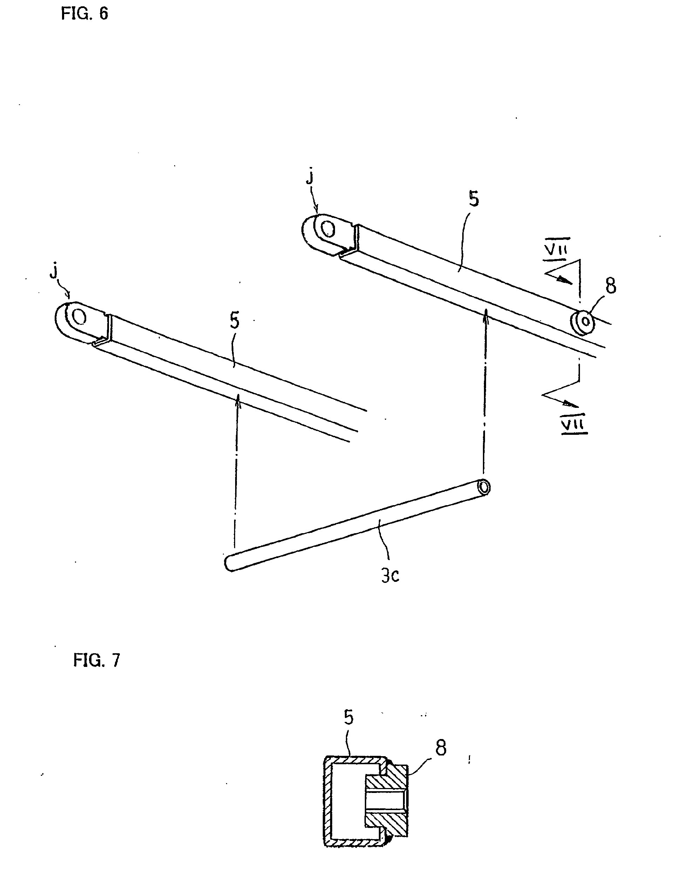

The front cross frame member 3c has its opposite end portions placed under and welded to lower surfaces of the lower pipes 5 (see also FIG. 6). The frame member 3c comprises a simple straight pipe.

As the frame member 3c is placed below and welded to the lower pipes 5 of the main frame members 2, it is not required to have as high a dimensional accuracy as the known cross frame members previously referred to, and hence can be manufactured easily and relatively inexpensively.

The rear cross frame member 3a comprises an elongate plate having its opposite end portions placed on and welded to upper surfaces of the upper pipes 4. Nuts 7 have their lower surfaces directly welded to upper surfaces of the upper pipes 4 near to the rear cross frame member 3a. The rider's seat S is mounted on the rear frame 1 by bolts (not shown) threaded into the nuts 7. The seat can be installed on the rear frame 1 with ease because the nuts 7, welded to the upper surfaces of the upper pipes 4, are easily accessible for the assembling operation.

Because the cross frame members 3a, 3b, 3c are simply vertically placed on or under, and welded to, the upper and lower pipes 4, 5, the said frame members are not required to have strict dimensional accuracy in their lengths. The lengths of the portions thereto to be welded to the upper and lower pipes 4, 5 may be relatively small. The cross frame members can thus be installed with ease, so that the rear frame 1 can be manufactured relatively inexpensively.

The gusset plates 6 welded to the outer side surfaces of the upper and lower pipes 4, 5 are identical in shape to each other and are oriented symmetrically with respect to the length of the rear frame 1. Consequently, the gusset plates 6 are of a common design and can be manufactured at less cost than would be the case if they were shaped differently from each other.

Nuts 8 are attached to outer surfaces of the lower pipes 5 forward and rearward of the gusset plates 6. As shown in FIG. 7, an attachment hole is formed in an outer wall of the lower pipe 5, and the nut 8 has its shank inserted in the attachment hole and welded to the pipe.

The joints j serve to connect the rear frame 1 to the front vehicle frame. The joints j of the respective upper and lower pipes 4 and 5 are different in shape from each other, for simplified structure and to reduce weight while attaining a required level of bonding strength.

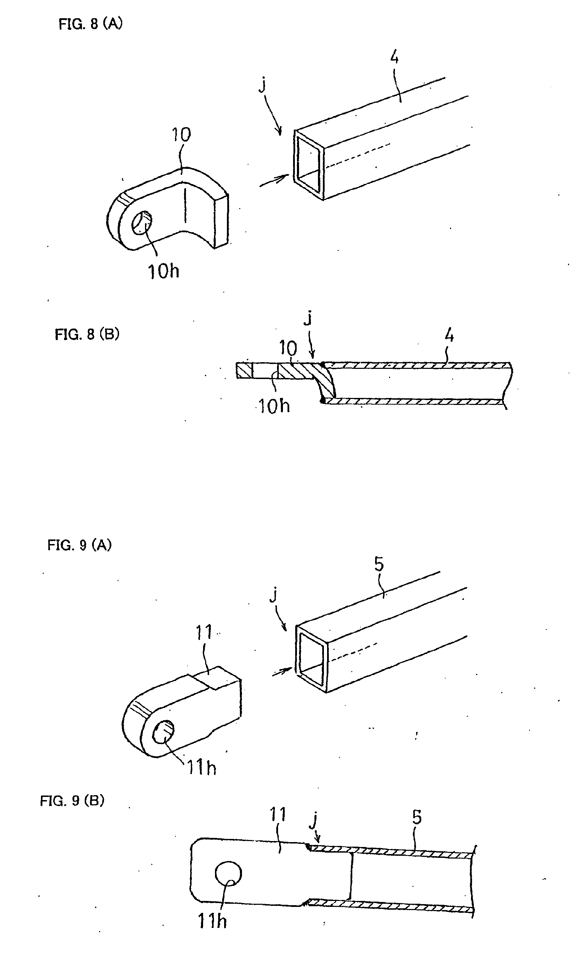

Thus, as shown in FIGS. 8A and 8B, each of the joints j of the upper pipes 4 comprises an L-shaped bracket 10 having a shorter arm inserted into the pipe from its open front end and welded to the pipe to thereby close the front end thereof. The bracket has a connecting hole 10h formed in its longer arm, which is not inserted in the pipe 4.

Each of the joints j of the lower pipes 5 comprises a cold-forged bracket 11 of greater thickness, for desired mechanical strength in its connecting function. As shown in FIGS. 9A and 9B, the bracket 11 has a narrower end inserted into the pipe from its open front end and welded to the pipe to thereby close the open front end thereof. The bracket 11 has a connecting hole 11h formed in the end therefor remote from the narrower end.

## Claims

1. A rear frame for a motor vehicle, comprising a pair of laterally spaced main frame members (2) and a plurality of cross frame members (3) interconnecting said main frame members, **characterized in that** one (3b) of said cross frame members having attachment means (t) at respective opposite ends thereof for supporting side covers (C).

2. A rear frame according to claim 1, wherein said one (3b) of the cross frame members has opposite end portions thereof projecting outwardly from said main frame members (2) and serving as attachment means for said side covers.

3. A rear frame according to claim 1 or 2, wherein at least one of said cross frame members (3) is vertically placed against and joined to said main frame members (2).

4. A rear frame according to any preceding claim, further comprising a pair of gusset plates (6) attached to outer surfaces of said main frame members (2), respectively, said gusset plates being identical in shape to each other.

5. A rear frame according to any preceding claim, wherein each of said main frame members (2) comprises upper and lower pipes (4,5), said cross frame members (3) including a front cross frame member (3c), an intermediate cross frame member (3b), and a rear cross frame member (3a), said front cross frame member (3c) and said intermediate cross frame member (3b) comprising respective pipes of circular cross-sectional shape vertically placed against and welded to said lower and upper pipes respectively, and said rear cross frame member (3a) comprising an elongate plate vertically placed against and welded to said upper pipes.

## Patentansprüche

1. Hinterrahmen für ein Kraftfahrzeug, der ein Paar von seitlich beabstandeten Hauptrahmengliedern (2) und eine Mehrzahl von Querrahmengliedern (3) umfasst, welche die Hauprahmenglieder miteinander verbinden,
**dadurch gekennzeichnet, dass** eines (3b) der Querrahmenglieder jeweils an seinen einander gegenüberliegenden Enden Befestigungsmittel (t) aufweist, um Seitenabdeckungen (C) zu haltern.

2. Hinterrahmen gemäß Anspruch 1, bei welchem eines (3b) der Querrahmenglieder einander gegenüberliegende Endabschnitte aufweist, die von den Hauptrahmengliedern (2) nach außen vorspringen und als Befestigungsmittel für die Seitenabdeckungen dienen.

3. Hinterrahmen gemäß Anspruch 1 oder 2, bei welchem zumindest eines der Querrahmenglieder (3) gegen die Hauptrahmenglieder (2) vertikal angeordnet und mit diesen verbunden ist.

4. Hinterrahmen gemäß einem der vorstehenden Ansprüche, der ferner ein Paar Einsetzplatten (6) umfasst, die jeweils an äußeren Flächen der Hauptrahmenglieder (2) befestigt sind, wobei die Einsetzplatten zueinander identisch gestaltet sind.

5. Hinterrahmen gemäß einem der vorstehenden Ansprüche, bei welchem jedes der Hauptrahmenglieder (2) obere und untere Rohre (4, 5) aufweist, wobei die Querrahmenglieder (3) ein vorderes Querrahmenglied (3c), ein Zwischen-Querrahmenglied (3b) und ein hinteres Querrahmenglied (3a) einschließen, wobei das vordere Querrahmenglied (3c) und das Zwischen-Querrahmenglied (3b) jeweilige Rohre von im Querschnitt kreisförmiger Gestalt umfassen, die gegen die unteren bzw. oberen Rohre vertikal angeordnet und an diesen angeschweißt sind, und wobei das hintere Querrahmenglied (3a) eine längliche Platte umfasst, welche gegen die oberen Rohre angeordnet und an diesen angeschweißt ist.

## Revendications

1. Châssis arrière pour un véhicule à moteur, comprenant deux éléments de châssis principaux (2) espacés latéralement et une pluralité d'éléments de châssis transversaux (3) interconnectant lesdits éléments de châssis principaux, **caractérisé en ce que** l'un (3b) desdits éléments de châssis transversaux comporte des moyens de fixation (t) à ses extrémités opposées respectives pour supporter des éléments de recouvrement latéraux (C).

2. Châssis arrière selon la revendication 1, dans lequel ledit un (3b) des éléments de châssis transversaux a ses parties d'extrémité opposées faisant saillie à l'extérieur desdits éléments de châssis principaux (2) et servant de moyens de fixation pour lesdits éléments de recouvrement latéraux.

3. Châssis arrière selon la revendication 1 ou 2, dans lequel au moins l'un desdits éléments de châssis transversaux (3) est placé verticalement contre lesdits éléments de châssis principaux (2) et joint à ceux-ci.

4. Châssis arrière selon l'une quelconque des revendications précédentes, comprenant en outre deux goussets (6) fixés aux surfaces extérieures desdits éléments de châssis principaux (2), respectivement, lesdits goussets étant l'un et l'autre de forme identique.

5. Châssis arrière selon l'une quelconque des revendications précédentes, dans lequel chacun desdits éléments de châssis principaux (2) comprend des tubes supérieur et inférieur (4, 5), lesdits éléments de châssis transversaux (3) comprenant un élément de châssis transversal avant (3c), un élément de châssis transversal intermédiaire (3b) et un élément de châssis transversal arrière (3a), ledit élément de châssis transversal avant (3c) et ledit élément de châssis transversal intermédiaire (3b) comprenant des tubes respectifs de section circulaire placés verticalement contre lesdits tubes inférieur et supérieur et soudés à ceux-ci, respectivement, et ledit élément de châssis transversal arrière (3a) comprenant une plaque allongée placée verticalement contre lesdits tubes supérieurs et soudée à ceux-ci.
